(19) Europäisches Patentamt
European Patent Office
Office européen des brevets

(11) **EP 3 340 165 A1**

(12) **EUROPEAN PATENT APPLICATION**

(43) Date of publication:
**27.06.2018 Bulletin 2018/26**

(51) Int Cl.:
***G06T 5/00*** *(2006.01)*

(21) Application number: **16306735.8**

(22) Date of filing: **20.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• SEIFI, Mozhdeh
  **35576 Cesson-Sévigné (FR)**
• REINHARD, Erik
  **35576 Cesson-Sévigné (FR)**

(74) Representative: **Browaeys, Jean-Philippe**
**TECHNICOLOR**
**1-5, rue Jeanne d'Arc**
**92130 Issy-les-Moulineaux (FR)**

(54) **METHOD OF COLOR GAMUT MAPPING INPUT COLORS OF AN INPUT LDR CONTENT INTO OUTPUT COLORS FORMING AN OUTPUT HDR CONTENT**

(57) This method comprises expanding lightness or luminance and chroma of each input color along a mapping curve $g(C, I) = 0$ which is different from a straight line, where said expanding comprises applying an inverse tone mapping algorithm to lightness or luminance and optionally applying a tone mapping algorithm along the same mapping curve to bring expanded out-of-gamut colors inside an output color gamut.

Fig.1

**Description**

Technical Field

The invention relates to the field of inverse-tone mapping a LDR color content into a HDR color content.

Background Art

Technologies allowing for extensions in luminance range are known as **high dynamic range** imaging, often shortened to HDR. HDR technologies focus on capturing, processing and displaying content of a higher dynamic range. Although a number of HDR display devices have appeared and cameras capable of capturing an increased dynamic range are being developed, there is still a very limited amount of HDR content available.

**HDR expansion:**

To prepare color content for HDR displays, it is known to use reverse or inverse tone mapping operators (iTMO). Such algorithms process the low dynamic range luminance information of colors in the image with the aim of recovering or recreating an appearance of the original scene, i.e. with high dynamic range. Typically, ITMOs take a conventional image as input (from here on referred to as LDR for low dynamic range), and **expand** the luminance range of the image, generally in a non-linear manner. Such a luminance processing may or may not be spatially varying, where spatially varying processing may reduce the amplification of artifacts at the cost of longer processing times.

**Chroma adjustments:**

Changes in luminance levels, such as for instance created by tone reproduction algorithms and inverse tone reproduction algorithms, may create images that may appear too color saturated, or not saturated enough. This is notably due to a quirk of the human visual system, which appears to interpret brighter scenes as being more saturated, even if the saturation encoded in the pixels is not affected. This is known as the Hunt effect.
This means that in applications where a change in luminance is implemented, without changes in other correlates of visual appearance, it is necessary to perform an additional adjustment to either saturation, or, equivalently, chroma.

**Representation of colors in color spaces:**

Image and video content can generally be represented in different color spaces. For instance, an RGB color space can be understood as a three-dimensional volume in a coordinate system defined by a red, a green and a blue primaries. The minimum and maximum values of the red, green and blue components representing colors in this RGB color space define the extent of a volume. The boundary of this volume is often referred to as a **color gamut.** RGB color spaces have usually a gamut boundary that is characterized by a cubic shape.
Values of the red, green and blue components that represent colors may be converted into other color spaces, and such a conversion may distort the shape of the gamut boundary. For instance, converting an RGB color space into the perceptually more uniform CIE $L^*a^*b^*$ color space results in an irregular gamut boundary. Conversions between different RGB color spaces, although each cubic in shape, correspond generally to rotation and/or scaling with respect to each other, dependent on the choice of primaries defining these color spaces. This is for instance the case for the two RGB color spaces defined by the ITU-R Rec. BT.709 and ITU-R Rec. BT.2020 standards. This means that representation of a color content specified in one RGB color space can typically be converted in another RGB color space through a linear matrix transform.

**Preferred color spaces for color gamut mapping:**

The application of a tone mapping algorithm may map colors of a content outside of a gamut in which colors of the image should be included, in order, for instance, to be displayed. Likewise, the application of an inverse tone mapping algorithm may produce colors that are outside such a color gamut. In conventional applications of color processing, out-of-gamut colors are generally repositioned within the color gamut by means of a gamut mapping algorithm added to the tone or inverse tone mapping algorithm.
To maintain control over the visual quality of the output of these mapping algorithms, including tone or inverse-tone algorithms, all mapping operations are generally carried out in an appropriately chosen color space. A perceptual color space is generally used for such mapping operations, as in such a color space, Euclidean distance can be assumed to be a reasonable metric of perceptual distance. Further, to ease such mapping operations, it may be beneficial to separate lightness from two chromatic channels in the representation of colors, and to choose a chroma channel and a hue channel for the two chromatic channels. Such color spaces will be referred to in the following as "cylindrical color spaces", because hue is calculated as an angle, taking a range of values between 0 and 360 degrees.

The well-known CIELab and IPT perceptual color spaces can be converted into cylindrical color spaces. As an example, from the *a* and *b* channels of CIELab, correlates of chroma *C* and hue *h* can be derived by setting

$$C = \sqrt{a^2 + b^2}$$ and $$h = \tan^{-1}\left(\frac{b}{a}\right).$$ The lightness *L* remains unchanged relative to CIELab. The resulting color space is referred to as LCh. For the *P* and *T* channels of the IPT color space, identical calculations may be performed, i.e. $$C = \sqrt{P^2 + T^2}$$ and $h = $ $$\tan^{-1}\left(\frac{T}{P}\right).$$ The lightness I remains unchanged relative to the IPT space. The resulting color space is then referred to as ICH.

A commonly used correlate of visual experience is that of saturation. In either cylindrical color space, saturation is often defined as chroma divided by lightness : in LCh, saturation *s* would therefore be $$s = \frac{C}{L},$$ as in IPT, saturation *s* would therefore be : *s(C,I) = C/I*. In embodiments described below, nonlinear definitions of the saturation with respect to chroma and lightness will be used instead.

As both CIELab and IPT can be defined as transformations from the XYZ color space, it is assumed known how conversions from any RGB color space to CIELab and IPT may be performed.

**Mapping colors in a color gamut:**

Any given display device can be characterized in terms of its color gamut and dynamic range. The color content that may be received by such a device may have a different color gamut and a different dynamic range. If the display device has a wider gamut than this color content, it may be advantageous to **expand** color values representing colors of the content to better match its color gamut, thereby enhancing and representing colors of the content such that full advantage of the color gamut capabilities of the display device is obtained. Similarly, if the peak luminance of the display device exceeds that of the content, then the dynamic luminance range of the content may be **expanded** to match that of the display. All such adjustments should be carried out such that no colors of the content are mapped outside the display's color gamut.

Note that a color space (as discussed in the previous paragraph) is no more than a coordinate system, whereas a color gamut describes a boundary within such a coordinate system.

A current trend is toward the diversification of display capabilities. Professional content may be graded to a certain specification of color gamut and dynamic range. Some display devices will have a higher specification while others may be lower. At the same time, display devices may receive color content not specifically graded to match its capabilities. In such cases, a color management system is required that can make the adjustments.

Partial solutions to a complete color management system exist, and may be combined to form a system that includes tone mapping, inverse tone mapping, chroma management as well as gamut boundary management. However, by stringing together such partial solutions, the complexity of the combined solutions may be unnecessarily high, and may be visually sub-optimal.

In particular, existing ITMO solutions focus on (perceptually) reproducing the appearance of the original scene and rely on strict assumptions about the content. In particular, they focus on the expansion of the luminance channel of an LDR content, taking into account the maximum luminance that is reproducible by the display device, i.e. its peak luminance. In complement to an expansion on the luminance channel of a LDR content, some state-of-art iTMO algorithms perform chroma correction on the chromatic channels of this content in the corresponding color space (e.g., YCbCr for television content). This chroma correction is generally designed to keep the visual aspects of the LDR content (e.g., saturation), without any control with regard to the actual chromatic boundaries of the color gamut of the display device, i.e. of the target color gamut. It means that iTMO algorithms may adapt a color content with respect to the luminance boundaries of a target color gamut, without any regard to the chromatic ones. This in return results in out-of-gamut chromatic content that is either clipped by the display device when the content is displayed, or should be mapped into the target gamut in a complementary mapping step. Note that such a target gamut can be that of a hypothetical display device, for instance the output container color space defined by the standard BT.2020.

Summary of invention

An aim of the invention is to process simultaneously the luminance channel and the chromatic channels of a color content, instead of processing these channels separately as in the prior art. An aim of the invention is also to perform this process along a mapping curve which is different from a straight line, to mean a non-linear relationship between luminance or lightness and chroma. Such a simultaneous process will advantageously enable any iTMO algorithm to increase the dynamic range of a color content while keeping better the visual appearance of the color content.

Advantageously, it is also proposed to implement this process using not only an inverse tone-mapping algorithm along this mapping curve, and by also a tone-mapping algorithm along the **same** mapping curve, this tone-mapping algorithm being designed to bring any out-of-gamut inverse-tone mapped colors back to the output color gamut without changing significantly in-gamut inverse-tone mapped colors, notably those which are located far away from the boundary of his output gamut.

Advantageously, it is also proposed to limit the complexity of the combined solutions of the prior art.

For these purposes, the subject of the invention is a method of color gamut mapping input colors of an input LDR content into output colors forming an output HDR content, from an input color gamut towards an output color gamut in a mapping color space that can be partitioned into 2D constant-hue slices having axes for lightness or luminance and chroma, said color gamut mapping method comprising, for each input color: - expanding lightness or luminance **and** chroma of said input color in the constant-hue slice of said input color and along a mapping curve $g(C,I) = 0$ defining a relationship between lightness $I$ or luminance and chroma $C$, where said expanding comprises applying an inverse tone mapping algorithm to lightness or luminance and results in an expanded color, wherein said mapping curve is **different from a straight line** in said constant-hue slice.

The input and output color gamut can be linked to an image device or can be linked to a color space container as that defined in a standard. Those gamuts or color space containers can be described in a manner known per se by a descriptor.

Preferably, said relationship between lightness $I$ and chroma $C$ is defined by the following equation:

$$C = k\, p(I),$$

where $p(I)$ is a monotonically non-linearly increasing **saturation compensation function** defined such that that $p(0) = 0$, and where k is a scalar defined such that $k = \dfrac{C^{\mathrm{in}}}{p(I^{in})}$, where $I^{\mathrm{in}}$ and $C^{\mathrm{in}}$ are respectively the lightness and the chroma of said input color.

In a first variant, said **saturation compensation function** is defined by $p(I) = I^q$, where q is a saturation compensation exponent which is different from zero and different from 1. Preferably, said saturation compensation exponent $q$ equal or superior to 1.5, or is equal or inferior to 0.5.

In a second variant, said relationship between lightness $I$ and chroma $C$ is defined by the following equation :

$$C = a(I)\, p(I) + k',$$

where $p(I)$ is a monotonically non-linearly increasing **saturation compensation function** defined such that that $p(0) = 0$, where $a(I)$ is defined as a **correlate of chroma** in a color appearance model (CAM), and where k is a scalar defined such that $k' = C^{\mathrm{in}} - a(I^{in})p(I^{in})$, where $I^{\mathrm{in}}$ and $C^{\mathrm{in}}$ are respectively the lightness and the chroma of said input color.

Preferably, said expanding further comprises applying a **tone mapping algorithm** to luminance or lightness of said expanded color **along said mapping curve,** resulting in an output color forming said output content, wherein said tone mapping algorithm is designed to bring the expanded color inside the output color gamut if said expanded color is located out of said output color gamut. Preferably, said tone mapping algorithm is further designed to keep as unchanged as possible said expanded color if said expanded color is located inside the output color gamut. Preferably, said tone mapping algorithm is further designed to obtain a first linear compression of luminance or lightness for dark and mid-tone lightness levels that are inferior to a compression threshold $I^{\mathrm{thresh}}$ and a second non-linear compression of luminance for high lightness levels that are superior to said compression threshold $I^{\mathrm{thresh}}$, wherein said second linear compression is higher than first linear compression. Preferably, said compression threshold $I^{\mathrm{thresh}}$ is inferior but close to the luminance or lightness $I^{\mathrm{out}}_{\mathrm{gamut}}$ of a color defined as the intersection of said mapping curve $g(C,I) = 0$ with said output color gamut.

A subject of the invention is also an image processing device comprising at least one processor configured to implement the above mapping method.

A subject of the invention is also an electronic device incorporating this image processing device, such as a TV set; a mobile device; a communication device; a game device; a tablet (or tablet computer) or a smartphone; a laptop; a camera; an encoding chip; a server.

A subject of the invention is also a non-transitory storage medium carrying instructions of program code for executing steps of the mapping method above, when said program is executed on a computing device.

Brief description of drawings

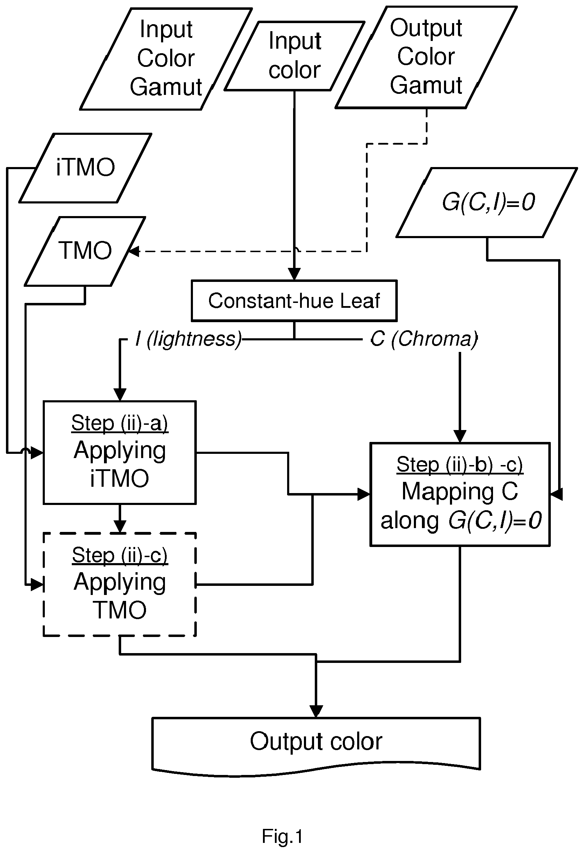

The invention will be more clearly understood on reading the description which follows, given by way of non-limiting example and with reference to the appended figure 1 describing a step (ii) of a main embodiment of the method of color gamut mapping according to the invention.

Description of embodiments

The **functions** of the various elements shown in the figure may be provided through the use of dedicated hardware as well as hardware capable of executing software in association with appropriate software. These functions may be substantially represented in **computer readable media** and so executed by a computer or processor, whether or not such computer or processor is explicitly shown. Explicit use of the term **"processor"** should not be construed to refer exclusively to hardware capable of executing software, and may implicitly include, without limitation, digital signal processor ("DSP") hardware, read-only memory ("ROM") for storing software, random access memory ("RAM"), and non-volatile storage.

A **main general embodiment** of the method of color gamut mapping will now be described in the following non-limiting context:

1. An input LDR color content with input colors, as for instance an image or a video sequence comprising a plurality of images.

2. A description of an input color gamut in which input colors of the input color content are included. Such an input color gamut can be linked to an image capture device (e.g., RGB of this capture device). Such an input color gamut can be an input color space container as that defined in the standard ITU-R Rec. BT 709, herein abbreviated as BT709.

3. A description of an output color gamut in which the output color content should be included. Such an output color gamut can be linked to an image display device (e.g., R'G'B' of this display device). Such an output color gamut can be an output space container as that defined in the standard ITU-R Rec. BT 2020, herein abbreviated as BT2020.

4. A description of a desired inverse tone-mapping operator (iTMO) $f()$ and of a mapping color space in which this iTMO is defined. Any known iTMO adapted for luminance expansion can be used. Any tone mapping curve that is monotonically increasing may be inverted to serve as an inverse tone mapping curve forming an iTMO. Preferably, this mapping color space is a perceptual color space such as Lab or IPT.

5. A description of a desired tone-mapping operator (TMO) $\int ()$ applicable in the same mapping color space, defined to control the effect of the iTMO $f()$ with respect to the boundaries of the output color gamut. More details are given below for this definition.

6. A relationship between luminance or lightness and chroma, expressing a desired perceptual aspect of the output color content. More details are given below. More details are given below for this relationship.

For the sake of simplicity, in this main non-limiting embodiment of color gamut mapping, **no change of hue is applied.** More specifically, the color mapping of each input color is performed in the constant-hue slice of this input color. In a variant, a step of mapping the hue of input colors can be implemented.

**About item 6** above, changes in luminance levels as that created by inverse tone mapping process may create images that may appear too color saturated, or not color saturated enough. This is notably due to a quirk of the human visual system, which appears to interpret brighter scenes as being more saturated, even if the saturation encoded in the pixels is not affected. This is known as the Hunt effect. This means that, in processes of inverse tone mapping (as for any process involving a change in luminance), it is necessary to perform an additional adjustment to either saturation, or, equivalently, chroma, if no change of visual appearance of the content is desired.

To ensure that saturation of an inverse tone mapped content is perceived correctly, the inverse tone mapping should not be applied to luminance or lightness values only. In other words, along this mapping process, it is proposed not only to map the luminance or lightness, but also the chroma $C$ of input colors according to a non-linear relationship between luminance or lightness and chroma which defines a **mapping curve** different from a straight line in the mapping color space.

In a **first variant,** this relationship is expressed according to:

Equation No. 1: $\qquad C = k\, p(I),$

where $p(I)$ is a monotonically non-linearly increasing **saturation compensation function** defined such that that $p(0) =$ 0, where $k$ is a scalar which can be defined based on the input color to map, according to Equation No. 1a : $\quad k = \dfrac{c^{\text{in}}}{p(I^{in})}$ .

Preferably, the **saturation compensation function** $p()$ is defined according to Equation No. 2:

$$p(I) = I^q,$$

where q is a saturation compensation exponent different from 1. For instance, $q = 1.5, 2$ or $0.5$.

In a variant, the **saturation compensation function** $p()$ is defined such that its second derivative with respect to $I$ is negative.

Note that in case the saturation compensation function would have been linear (i.e. if q=1) and in case the saturation would have be defined as chroma divided by lightness, equation No. 1 would mean keeping the saturation constant.

In a **second variant,** this relationship between luminance or lightness and chroma is expressed according to:

Equation No. 3: $\qquad C = a(I)\, p(I) + \mathbf{k'}$

where $p(I)$ is already defined above,

where $a(I)$ is defined as a **correlate of chroma** that can be found in any color appearance model (CAM).

where $k'$ is a scalar which can be defined based on the input color to map, according to Equation No. 3b : $k' = C^{\text{in}} - a(I^{in})p(I^{in})$,

For instance, when using the CIECAM2, such a correlate of chroma $a(I)$ can be defined according to:

$$a(I) = \frac{t^{0.29}}{10}\left(1.64 - 0.29^n\right)^{0.73}\ \sqrt{I},$$

where t is a temporary constant quantity defined in the CIECAM2.

For instance, when using a Color Appearance Model defined by Reinhard, such a correlate of chroma $a(I)$ can be defined according to:

$$a(I) = 93\left(\frac{\left(\Sigma\left(\frac{I}{I\,L_{max}^{-1}+\tau}\,a_m\right)^2 + \Sigma\left(\frac{I}{I\,L_{max}^{-1}+\tau}\,b_m\right)^2\right)}{10^{-3}+\max\left(0,\frac{I}{I\,L_{max}^{-1}+\tau}\,d_m\right)}\right)^{0.73},$$

with $a_m$, $b_m$, $d_m$ and $\tau$ being constants, and $L_{max}$ denoting the maximum output luminance of the display device linked to the output color gamut.

**More generally,** such a relationship between luminance or lightness and chroma can be expressed by:

Equation No.4: $\qquad g(C, I) = 0.$

Where g(,) is a non-linear function for at least one of the two variables $C$ and $I$.

Again, in each constant-hue slice, such a non-linear function forms a curve that is different from a straight line. This curve will be named below **"mapping curve".** Each input color has its own mapping curve

**About item 5** above concerning the definition of the tone-mapper operator $\int$ (), let us states that:

- the intersection of the mapping curve $g(C,I) = 0$ described above with the input color gamut defines a maximum lightness input $\left(I^{\text{in}}_{\text{gamut}}\right)$ and

- the intersection of this mapping curve $g(C,I) = 0$ with the output color gamut defines a maximum lightness output $\left(I^{\text{out}}_{\text{gamut}}\right)$.

When the application of the inverse tone mapped operator of item 3 above results in lightness values that are superior to $I^{\text{out}}_{\text{gamut}}$, corresponding then to out-of-gamut expanded colors, it is desired to bring these out-of-gamut colors inside the output color gamut. The tone-mapper operator $\int$ () of item 5 is designed to get this result when applied along the mapping curve $g(C,I) = 0$ to these out-of-gamut colors. This tone-mapper operator $\int$ () is preferably designed not only to bring out-of-gamut colors inside the output color gamut, but also to keep as unchanged as possible expanded colors that located already inside the output gamut boundaries.

It means notably that it is preferred to **design the tone-mapper operator** such as to compress a small highest portion of the dynamic range, keeping most of it unchanged or only slightly changed. Preferably, this highest portion of the dynamic range corresponds to a part of the mapping curve with a lightness above a threshold output lightness $I^{\text{thresh}}$, where $I^{\text{thresh}}$ is inferior but preferably close to $I^{\text{out}}_{\text{gamut}}$. A threshold color $(C^{\text{thresh}}, I^{\text{thresh}})^{\text{ind}}$ can be defined on the mapping curve as the boundary between this highest portion and the lowest portion of the dynamic range.

More precisely, this tone-mapper operator can be defined in order to allow a slight linear compression of luminance for dark and mid-tone lightness levels inferior to $I^{\text{thresh}}$ but a higher and non-linear compression of luminance for high lightness levels superior to $I^{\text{thresh}}$.

**Having defined items 1 to 6** above, the main general embodiment of the method of color gamut mapping comprises :

- (i) converting the input color content into the mapping color space,
- (ii) performing luminance-chroma expansion of the converted input color content in the constant-hue slice of each input color along non-straight mapping curves $g(C,I) = 0$ (therefore meeting conditions of item 6 above) and inside the output color gamut (see item 3 above), by applying the iTMO of item 4 above and the TMO of item 5 above to its luminance channel,
- (iii) converting the expanded content of step (ii) into the output color space.

The main general embodiment of this method is detailed below along these steps (i) to (iii).

**(i) Conversion into a mapping color space:**

Using any well-known conversion method, the **input LDR color content is converted** into the device independent XYZ color space, from there to the LMS color space (equation No.8 below), from there to the IPT color space (equation No.6 below), and, from there, to the cylindrical IPT (i.e. ICH) color space (equation No.5 below), as follows:

$$\text{Equation No. 5:} \quad \begin{cases} I = I \\ C = \sqrt[2]{P^2 + T^2} \\ h = \tan^{-1}\left(\frac{T}{P}\right) \end{cases}$$

$$\text{Equation No. 6:} \quad \begin{bmatrix} I \\ P \\ T \end{bmatrix} = W_1 \begin{bmatrix} L' \\ M' \\ S' \end{bmatrix} \quad , \text{ with } \quad W_1 = \begin{bmatrix} 0.4000 & 0.4000 & 0.2000 \\ 4.4550 & -4.8510 & 0.3960 \\ 0.8056 & 0.3572 & -1.1628 \end{bmatrix}$$

$$\text{Equation No. 7:} \quad C' = \begin{cases} C^{0.43} & \text{if } C \geq 0 \\ -(-C)^{0.43} & \text{otherwise} \end{cases}$$

Equation No. 8: $\begin{bmatrix} L \\ M \\ S \end{bmatrix} = W_2 \begin{bmatrix} X \\ Y \\ Z \end{bmatrix}$ , with $W_2 = \begin{bmatrix} 0.4002 & 0.7075 & -0.0807 \\ -0.2280 & 1.1500 & 0.0612 \\ 0.0000 & 0.0000 & 0.9184 \end{bmatrix}$

where in Equation No. 7, $C \in \{L, M, S\}$ and $C' \in \{L',M',S'\}$ are calculated correspondingly. In Equation No. 1 , $I$ stands for lightness, $C$ for chroma and $h$ for hue.

Similarly, the description of the input color gamut is converted into the mapping cylindrical color space ICh, and the description of the output color gamut is converted into the mapping cylindrical color space ICh.

Note that the mapping color space is three dimensional, and therefore so are the gamut boundaries. As the color mapping of each input color is performed in the constant-hue slice of this input color, these gamut boundaries can be represented in this constant-hue slice as a 2D lightness-chroma gamut curve.

**(ii) Performing luminance-chroma expansion:**

This step (ii) is illustrated on figure 1.

As the input color content and the gamut boundaries are now converted into the mapping color space, luminance-chroma expansion can be now performed, in which the converted lightness $I^{in}$ and the converted chroma $C^{in}$ of a color of the converted input color content are mapped respectively into an output lightness $I_t^{\text{ind}}$ and an output chroma $C_t^{\text{ind}}$ of an output color content such as the resulting mapped color is inside the output color gamut.

a) **Mapping along the achromatic channel:**

Conventional iTMO algorithms are typically designed to expand the luminance channel $J$ of a color content as part of an inverse tone mapping process. Such an iTMO algorithm may be applied to the input converted content in order to expand the achromatic channel of the content. Denoting this achromatic channel by $J,$ such an iTMO algorithm is designed to expand the range $\left[0, J\,_{\max}^{\text{in}}\right]$ of the input color content to a range $\left[0,\, J\,_{\max}^{\text{out}}\right]$ of the output color content. Here, the **iTMO algorithm** is denoted by a function $J^{\text{out}} = f (J^{\text{in}})$ that is a **one dimensional function** acting solely on the achromatic channel.

As, in the ICH mapping color space, the achromatic channel is not luminance but lightness (where lightness can be understood as a non-linear transform of luminance), the input $J$ of the iTMO algorithm is temporarily converted forth and back using Equation No. 9 and Equation No. 10 to the lightness channel $I$ using a conversion function denoted by £ :

Equation No. 9: $\qquad J = £(I) = I^{2.4},$

and:

Equation No. 10: $\qquad £^{-1}(J) = J^{1/2.4}$

The iTMO algorithm $f(J)$ could therefore be applied on the lightness axis $I$ of the mapping color space as follows:

Equation No. 11: $\qquad I^{\text{out}} = £^{-1}\left(f\left(£\left(I^{\text{in}}\right)\right)\right)$

Applying the iTMO algorithm $f()$ corresponds to a mapping of only lightness $I$. However, such a mapping would likely not produce chroma values that match visual expectation. In other words, the saturation of the lightness-mapped content will appear visually too low, notably due to the Hunt effect (quoted above).

b) **Simultaneously mapping chroma along non-straight mapping curves $g(C,I)= 0$ :**

While applying the iTMO algorithm $f()$, the non-linear relationship between lightness and chroma according to item 6 above is kept, resulting in an expansion of chroma $Ci_n$ into a $C^{out}$.

When using the non-linear relationship between luminance or lightness and chroma as defined in its **first variant above** in equation No. 1, the chroma $C^{in}$ is mapped into a chroma $C^{out}$ according to :

$$\text{Equation No. 12 :} \qquad C^{\text{out}} = C^{\text{in}} \frac{p(I^{\text{out}})}{p(I^{\text{in}})}$$

Using equation No. 2 defining $p(I)$ and Equation No. 11 above, we have:

$$\text{Equation No. 12a :} \quad C^{\text{out}} = \frac{C^{\text{in}}}{(I^{\text{in}})^q} \left( \pounds^{-1}\!\left(f\left(\pounds\left(I^{\text{in}}\right)\right)\right) \right)^q .$$

where q is the saturation compensation exponent defined above.

Note that if q=1, we would have had :

$$C^{\text{out}} = C^{\text{in}} \frac{I^{\text{out}}}{I^{\text{in}}}$$

Note that, if a linear relationship between lightness and chroma (i.e. q=1) would be used instead of a non-linear one $\left( C^{\text{out}} = C^{\text{in}} \frac{I^{\text{out}}}{I^{\text{in}}} \right)$, and/or if saturation would be defined as the ratio of chroma and lightness, the visual quality of the mapped colors would have been better than those that can be obtained by mapping luminance or lightness only. But, such a definition of saturation is approximate in itself. A non-linear relationship between chroma and lightness actually produce a visually better result. That is why it is preferred to have the saturation compensation exponent q different from 1. Preferred values are for instance, q = 1.5, 2 or 0.5.

When using the non-linear relationship between luminance or lightness and chroma as defined in its **second variant above** in equation No. 3, it is proposed to map the chroma $C^{in}$ into a chroma $C^{out}$ according to:

$$\text{Equation No. 13 :} \; C^{\text{out}} = C^{\text{in}} + a(I^{out})p(I^{out}) - a\left(I^{in}\right)p\left(I^{in}\right)$$

Using equation No. 2 defining $p(I)$ and Equation No. 11 above, we have then

Equation No. 13a:

$$C^{\text{out}} = C^{in} + a\left( \pounds^{-1}\!\left(f\left(\pounds\left(I^{\text{in}}\right)\right)\right) \right)\left( \pounds^{-1}\!\left(f\left(\pounds\left(I^{\text{in}}\right)\right)\right) \right)^q - a\left(I^{in}\right)\left(I^{in}\right)^q$$

Preferably, the saturation compensation exponent q is inferior to 1. In this situation, the second derivative with respect to $I$ of the saturation compensation function $p()$ is negative. For instance, q = 0.5.

c) **Mapping with respect of the gamut boundaries:**

A third condition for the mapping of colors of the converted input content is that the resulting mapped colors should be located inside the converted output color gamut, as described according to item 3 above, this description being converted in sub-step a) above in the mapping color space. As a matter of fact, the expanded or mapped colors ($C^{out}$,$I^{out}$) resulting from steps (ii)-a) and (ii)-b) above that have a lightness superior to the maximum lightness output $I^{\text{out}}_{\text{gamut}}$ are then located out the output color gamut.

To obtain the third condition above, it is proposed to apply along the same mapping curve **g(C,I) = 0** the tone-mapping operator of item 4 to the expanded colors resulting from steps (ii)-b) above.

Applying this tone-mapper operator to the lightness channel of the lightness-mapped colors obtained from steps (ii)-a) and (ii)-b) will then give $I^{\text{ind}}_t$

$$\text{Equation No. 14:} \qquad I^{\text{ind}}_t = \pounds^{-1}\left( \smallint\left( f\left(\pounds\left(I^{in}\right)\right)\right)\right)$$

The corresponding chroma $C_t^{\mathrm{ind}}$ is obtained by applying the equation of the mapping curve:

$$\text{Equation No. 4a:} \qquad g\left(C_t^{\mathrm{ind}}, I_t^{\mathrm{ind}}\right) = 0$$

$\left(C_t^{\mathrm{ind}}, I_t^{\mathrm{ind}}\right)$ cuppled with the corresponding hue is the final mapped output color. As the tone-mapper operator $\int()$ is designed to bring out-of-gamut colors inside the output color gamut, the resulting colors $\left(C_t^{\mathrm{ind}}, I_t^{\mathrm{ind}}\right)$ are all located inside the output color gamut. As the tone-mapper operator $\int()$ is designed to keep as unchanged as possible colors that were already located inside the output gamut boundaries, the effect of expansion of luminance or lightness provided by the inverse tone mapping algorithm is kept.

**(iii) converting the expanded content of step (ii) into the output color space**

The gamut mapped results of the previous step (ii) are finally converted from the mapping color space to the output color space. Assuming that the transformations between the device independent XYZ color space and the output device color space are known through the third input of the framework (item 3 above), the results are transformed back to the device independent XYZ color space. For the example of ICH being the mapping color space, this conversion uses for instance the following equations 5a to 8a, similar respectively to equations 5 to 8 above:

$$\text{Equation No. 8a:} \quad \begin{bmatrix} X \\ Y \\ Z \end{bmatrix} = W_3 \begin{bmatrix} L \\ M \\ S \end{bmatrix} \quad , \quad W_3 = \begin{bmatrix} 1.8502 & -1.1383 & 0.2384 \\ 0.3668 & 0.6439 & -0.0107 \\ 0.0000 & 0.0000 & 1.0889 \end{bmatrix}$$

$$\text{Equation No. 7a:} \quad C = \begin{cases} C'^{0.43} & if \ C \geq 0 \\ -(-C')^{0.43} & else \end{cases}$$

$$\text{Equation No. 6a:} \quad \begin{bmatrix} L' \\ M' \\ S' \end{bmatrix} = W_4 \begin{bmatrix} I \\ P \\ T \end{bmatrix} \quad , \quad W_4 = \begin{bmatrix} 1.0000 & 0.0976 & 0.2052 \\ 1.0000 & -1.1139 & 0.1332 \\ 1.0000 & 0.0326 & -0.6769 \end{bmatrix}$$

$$\text{Equation No. 5a:} \quad \begin{cases} I = I \\ P = C \cos h \\ T = C \sin h \end{cases}$$

where in Equation No. 7b, $C \in \{L, M, S\}$ and $C' \in \{L', M', S'\}$.

At the end of this color gamut mapping process, an HDR output color content is obtained.

The above method of color gamut mapping can be implemented in any image processing device using at least one processor configured to implement this method. Such an image processing device can be incorporated in an electronic device, such as a TV set; a mobile device ; a communication device ; a game device ; a tablet (or tablet computer) or a smartphone ; a laptop ; a camera ; an encoding chip ; a server.

It is to be understood that this method may be implemented in various forms of hardware, software, firmware, special purpose processors, or combinations thereof. This method may be notably implemented as a combination of hardware and software. Moreover, the software may be implemented as an application program tangibly embodied on a program storage unit. The application program may be uploaded to, and executed by, an image processing unit comprising any suitable architecture. Preferably, this unit is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and an image device, such as an image display device or an image capture device.

All embodiments and examples of the present invention are intended to encompass both structural and functional equivalents thereof. Additionally, it is intended that such equivalents include both currently known equivalents as well as equivalents developed in the future, i.e., any elements developed that perform the same function, regardless of structure.

**Claims**

1. Method of color gamut mapping input colors of an input LDR content into output colors forming an output HDR content, from an input color gamut towards an output color gamut in a mapping color space that can be partitioned into 2D constant-hue slices having axes for lightness or luminance and chroma, said color gamut mapping method comprising, for each input color:

   - expanding lightness or luminance **and** chroma of said input color in the constant-hue slice of said input color and along a mapping curve $g(C,I) = 0$ defining a relationship between lightness $I$ or luminance and chroma $C$, where said expanding comprises applying an inverse tone mapping algorithm to lightness or luminance and results in an expanded color,

   wherein said mapping curve is **different from a straight line** in said constant-hue slice.

2. Method of color gamut mapping according to claim 1 wherein said relationship between lightness $I$ and chroma $C$ is defined by the following equation:

$$C = k\,p(I),$$

   where $p(I)$ is a monotonically non-linearly increasing **saturation compensation** function defined such that that $p(0)$ = 0, and where k is a scalar defined such that $k = \dfrac{C^{\text{in}}}{p(I^{\text{in}})}$, where $I^{\text{in}}$ and $C^{\text{in}}$ are respectively the lightness and the chroma of said input color.

3. Method of color gamut mapping according to claim 2 wherein said **saturation compensation function** is defined by $p(I) = I^q$, where q is a saturation compensation exponent which is different from zero and different from 1.

4. Method of color gamut mapping according to claim 3 wherein said saturation compensation exponent q equal or superior to 1.5.

5. Method of color gamut mapping according to claim 3 wherein said saturation compensation exponent $q$ is equal or inferior to 0.5.

6. Method of color gamut mapping according to claim 2 wherein said relationship between lightness $I$ and chroma $C$ is defined by the following equation:

$$C = a(I)\,p(I) + k',$$

   where $p(I)$ is a monotonically non-linearly increasing **saturation compensation function** defined such that that $p(0) = 0$, where $a(I)$ is defined as a **correlate of chroma** in a color appearance model (CAM), and where k is a scalar defined such that $k' = C^{\text{in}} - a(I^{\text{in}})p(I^{\text{in}})$, where $I^{\text{in}}$ and $C^{\text{in}}$ are respectively the lightness and the chroma of said input color.

7. Method of color gamut mapping according to any one of claims 1 to 6 wherein said expanding further comprises applying a **tone mapping algorithm** to luminance or lightness of said expanded color **along said mapping curve,** resulting in an output color forming said output content, wherein said tone mapping algorithm is designed to bring the expanded color inside the output color gamut if said expanded color is located out of said output color gamut.

8. Method of color gamut mapping according to claim 7, wherein said tone mapping algorithm is further designed to keep as unchanged as possible said expanded color if said expanded color is located inside the output color gamut.

9. Method of color gamut mapping according to claim 7 or 8 wherein said tone mapping algorithm is further designed to obtain a first linear compression of luminance or lightness for dark and mid-tone lightness levels that are inferior to a compression threshold $l^{thresh}$ and a second non-linear compression of luminance for high lightness levels that are superior to said compression threshold $l^{thresh}$, wherein said second linear compression is higher than first linear compression.

10. Method of color gamut mapping according to claim 9 wherein said compression threshold $l^{thresh}$ is inferior but close to the luminance or lightness $l^{out}_{gamut}$ of a color defined as the intersection of said mapping curve $g(C,l) = 0$ with said output color gamut.

11. Image processing device comprising at least one processor configured to implement the method according to any one of claims 1 to 10.

12. Electronic device incorporating the image processing device of claim 11.

13. Non-transitory storage medium carrying instructions of program code for executing steps of the method according to one of claims 1 to 10 when said program is executed on a computing device.

Fig.1

Europäisches
Patentamt

European
Patent Office

Office européen
des brevets

# EUROPEAN SEARCH REPORT

Application Number

EP 16 30 6735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/043260 A1 (RAMANATH RAJEEV [US] ET AL) 21 February 2008 (2008-02-21) | 1,11-13 | INV. G06T5/00 |
| Y | * paragraphs [0001] - [0012], [0030] - [0052]; claim 1; figure 6 * | 2-10 | |
| Y | MANTIUK R ET AL: "Color correction for tone mapping", COMPUTER GRAPHICS FORUM, WILEY-BLACKWELL PUBLISHING LTD, GB, vol. 28, no. 2, 1 April 2009 (2009-04-01), pages 193-202, XP002596979, ISSN: 0167-7055, DOI: 10.1111/J.1467-8659.2009.01358.X * the whole document * | 2-6 | |
| Y | US 2010/020242 A1 (LAMMERS MATHEUS J G [NL] ET AL) 28 January 2010 (2010-01-28) * abstract; figure 16 * | 7-10 | |
| X | US 2016/328830 A1 (POULI TANIA [FR] ET AL) 10 November 2016 (2016-11-10) * paragraphs [0001] - [0009], [0045] - [0102]; figure 1 * | 1,11-13 | |
| X | US 2009/154798 A1 (MIZUKURA TAKAMI [JP] ET AL) 18 June 2009 (2009-06-18) * abstract; figure 10 * | 1,11-13 | TECHNICAL FIELDS SEARCHED (IPC) G06T |
| X | EP 0 961 488 A2 (SONY CORP [JP]) 1 December 1999 (1999-12-01) * paragraph [0047] - paragraph [0058]; figures 16-17 * | 1,11-13 | |

The present search report has been drawn up for all claims

| Place of search | Date of completion of the search | Examiner |
|---|---|---|
| The Hague | 9 June 2017 | Wozniak, Doris Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                   

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6735

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2017

| Patent document cited in search report | | | Publication date | Patent family member(s) | | | Publication date |
|---|---|---|---|---|---|---|---|
| US 2008043260 | A1 | | 21-02-2008 | TW<br>US<br>WO | 200826057<br>2008043260<br>2008024710 | A<br>A1<br>A2 | 16-06-2008<br>21-02-2008<br>28-02-2008 |
| US 2010020242 | A1 | | 28-01-2010 | CN<br>EP<br>US<br>WO | 101543084<br>2123056<br>2010020242<br>2008065575 | A<br>A1<br>A1<br>A1 | 23-09-2009<br>25-11-2009<br>28-01-2010<br>05-06-2008 |
| US 2016328830 | A1 | | 10-11-2016 | CN<br>EP<br>JP<br>KR<br>US<br>WO | 105850114<br>3087730<br>2017502602<br>20160102524<br>2016328830<br>2015096955 | A<br>A1<br>A<br>A<br>A1<br>A1 | 10-08-2016<br>02-11-2016<br>19-01-2017<br>30-08-2016<br>10-11-2016<br>02-07-2015 |
| US 2009154798 | A1 | | 18-06-2009 | JP<br>JP<br>US | 4517308<br>2009147580<br>2009154798 | B2<br>A<br>A1 | 04-08-2010<br>02-07-2009<br>18-06-2009 |
| EP 0961488 | A2 | | 01-12-1999 | EP<br>JP<br>US | 0961488<br>H11341296<br>6388674 | A2<br>A<br>B1 | 01-12-1999<br>10-12-1999<br>14-05-2002 |

EPO FORM P0459

For more details about this annex : see Official Journal of the European Patent Office, No. 12/82